# EUROPEAN PATENT APPLICATION

(11) **EP 4 520 962 A1**
(43) Date of publication of application: **12.03.2025**
(21) Application number: 23195595.6
(22) Date of filing: 06.09.2023
(51) Int. Cl.: F03D 80/00, F03D 1/06

(54) **WIND TURBINE**

(71) Applicant: Siemens Gamesa Renewable Energy A/S, 7330 Brande (DK)
(72) Inventor: Kristensen, Mikkel Aggersbjerg, 7400 Herning (DK)
(74) Representative: SGRE-Association

(57) **Abstract**

A wind turbine (1), comprising:
a rotor (2) with at least one blade (6),
a main shaft (8) configured for transmitting a rotation of the rotor (2) to a generator (3) of the wind turbine, the main shaft (8) comprising an inner cavity (17),
at least one pitch drive (25) for adjusting a pitch angle (α) of the at least one blade (6), and
at least one energy storage unit (26) for supplying energy to the at least one pitch drive (25), the at least one energy storage unit (26) being arranged in the cavity (17) of the main shaft (8).

By arranging the at least one energy storage unit in the cavity of the main shaft, instead of arranging it in a rotor hub, space inside the hub can be saved.

## Description

The present invention relates to a wind turbine.

Modern wind turbines usually have rotor blades with adjustable pitch angle. The rotor blades can be rotated about their longitudinal axis by means of a pitch drive. By adjusting the pitch angles of the rotor blades according to the wind conditions, the power generation of the wind turbine can be optimized. Furthermore, the pitch drive allows to move the blades into feather position and, thus, to aerodynamically brake the rotor. The aerodynamical braking of the rotor blades is also used in case of an emergency. Such an emergency includes, for example, a failure of the drive train of the wind turbine or a damaged and/or uncontrolled state of the wind turbine, e.g., due to lightning. To ensure the availability of the aerodynamical braking of the rotor blades, the pitch drive is required to function even in an emergency case.

It is one object of the present invention to provide an improved wind turbine.

Accordingly, a wind turbine is provided. The wind turbine comprises:
a rotor with at least one blade,
a main shaft configured for transmitting a rotation of the rotor to a generator of the wind turbine, the main shaft comprising an inner cavity,
at least one pitch drive for adjusting a pitch angle of the at least one blade, and
at least one energy storage unit for supplying energy to the at least one pitch drive, the at least one energy storage unit being arranged in the cavity of the main shaft.

The at least one pitch drive and the at least one energy storage unit for supplying energy to the at least one pitch drive are part of a pitch system of the wind turbine for adjusting the pitch angle of the at least one blade. The pitch system of the wind turbine is used for optimizing the rotor speed and the power generation of the wind turbine during normal conditions. Furthermore, the pitch system is also used for aerodynamically braking the at least one rotor blade in case of an emergency such as a failure of the drive train of the wind turbine or a damaged/uncontrolled state of the wind turbine, e.g., due to lightning.

By arranging the at least one energy storage unit in the cavity of the main shaft, the at least one energy storage unit is arranged close to the at least one blade and close to the pitch drive. Hence, the at least one pitch drive can be supplied with energy (e.g., hydraulic or electric energy) even in a case in which an energy supply from the stationary part of the nacelle is interrupted and/or not possible. Thus, an aerodynamical braking of the at least one rotor blade is possible even in an emergency case.

Further, by arranging the at least one energy storage unit in the cavity of the main shaft, the at least one energy storage unit is rotating together with the main shaft and the rotor. Hence, energy supplied from the at least one energy storage unit to the at least one pitch drive does not have to be transported from a rotating part to a stationary part of the wind turbine. Hence, a risk of interruption of energy supply (e.g., by tearing off an energy supply line) from the at least one energy storage unit to the at least one pitch drive is reduced. Herein, the rotor and the main shaft are regarded as rotating part. Further, the stationary part of the nacelle, such as a bed plate and a housing of the nacelle, are regarded as the stationary part being stationary with respect to said rotating part.

Moreover, by arranging the at least one energy storage unit in the cavity of the main shaft - instead of or in addition to arranging it in an interior space of a hub of the rotor -, space inside the hub can be saved. Hence, the hub can be configured smaller. Therefore, the hub can be easier transported, e.g., to an erection site of the wind turbine. Further, regulations with respect to a limited transportation size of a wind turbine hub (e.g., a limited height and width of the hub during transport) can be easier fulfilled.

Furthermore, saving space inside the hub becomes also important in view of the development that sizes of wind turbines and wind turbine blades are increasing.

In particular, longer and heavier blades require an increased capacity of blade bearings. The capacity of blade bearings can be increased, for example, by increasing the height of the blade bearing and/or stiffening the structural hub. However, these measures tend to reduce interior space in the hub.

Further, longer and heavier blades cause higher pitch loads and, hence, require larger amounts of energy for adjusting the pitch angle. Hence, a larger amount of energy needs to be supplied for the emergency pitch function. This means, that a size and/or number of energy storage units for supplying energy to the pitch drive needs to be increased. It is therefore proposed here to arrange one or more energy storage units for supplying energy to the at least one pitch drive inside the cavity of the main shaft.

The wind turbine is an apparatus to convert the wind's kinetic energy into electrical energy. The wind turbine comprises the rotor having a hub and one or more blades each connected to the hub. The rotor is configured to be driven by wind to rotate. The wind turbine further comprises a nacelle accommodating the generator. The generator is configured to convert the rotational energy into electrical energy. The wind turbine optionally comprises a gear box arranged inside the nacelle. The wind turbine further comprises a tower holding, at its top end, the nacelle. The tower of the wind turbine is mechanically connected to a foundation fixed to the ground or seabed.

The main shaft is a rotating shaft. The main shaft is, in particular, a low-speed rotating shaft. The main shaft rotates, for example, with the same rotational speed as the rotor. The main shaft connects the rotor hub to the gear box and/or the generator. In particular, the main shaft is configured to transmit the rotation of the rotor either directly to the generator (gearless wind turbine) or to transmit it via the gear box and a further rotating shaft (high-speed rotating shaft) to the generator (geared wind turbine).

The main shaft is arranged at least partially inside the nacelle. The wind turbine includes, in particular, one or more bearings configured for supporting the main shaft rotatably around a rotational axis of the main shaft.

The wind turbine further comprises, in particular, at least one pitch bearing (blade bearing) for supporting the at least one blade rotatably around a longitudinal blade axis.

The at least one pitch drive is, for example, arranged at the hub. The at least one pitch drive is, for example, arranged inside the hub (i.e., in an interior space of the hub) and/or is arranged on an external surface of the hub.

The at least one pitch drive includes, for example, a hydraulic pitch drive (e.g., one or more hydraulic cylinders) or an electric pitch drive (e.g., one or more electric motors).

The at least one pitch drive is, in particular, connected by means of an energy line (e.g., hydraulic line or electric line) to the at least one energy storage unit.

The main shaft includes the inner cavity. The inner cavity is, for example extending through the entire main shaft. The inner cavity has, in particular, an elongated shape. A length of the inner cavity is, for example, multiple times (e.g., three times or more, five times or more and/or seven times or more) longer than a diameter (e.g., minimum diameter) and/or a height and a width of the inner cavity.

The main shaft is, for example, a rotationally symmetric body with respect to the rotational axis of the main shaft. Hence, also the inner cavity of the main shaft has, for example, a rotationally symmetric shape with respect to the rotational axis of the main shaft. The inner cavity of the main shaft includes, for example, the rotational axis of the main shaft.

The at least one energy storage unit is, for example, a storage unit for storing hydraulic energy (e.g., a piston accumulator) or for storing electric energy (e.g., an ultracapacitor, a battery, a lithium battery and/or a lead-acid battery).

The at least one energy storage unit has, for example, an elongated cylindrical shape.

According to an embodiment, the pitch drive includes a hydraulic pitch drive, and the at least one energy storage unit includes at least one storage unit for storing hydraulic energy.

The pitch system is, in particular, a hydraulic pitch system in this embodiment.

Energy storage units for storing hydraulic energy (e.g., piston accumulators) are particularly large and/or have an elongated shape with a particularly large length. Hence, for hydraulic energy storage units, solving the problem of limited space within the hub is of great importance. Further, due to the elongated shape of the hydraulic energy storage units, they can be easily arranged in and/or fit well into the elongated inner cavity of the main shaft.

According to a further embodiment, the pitch drive includes an electric pitch drive, and the at least one energy storage unit includes at least one storage unit for storing electric energy.

In particular, the pitch system is an electric pitch system in this embodiment.

According to a further embodiment, the at least one energy storage unit is attached to the main shaft such that it rotates together with the main shaft.

Thus, the at least one energy storage unit, the main shaft and the rotor including its hub and blade(s) are rotating together.

According to a further embodiment, the main shaft comprises an inner wall defining the inner cavity, and the at least one energy storage unit is attached to the inner wall of the main shaft.

In particular, the inner wall of the main shaft surrounds the inner cavity.

The at least one energy storage unit and/or a housing of the at least one energy storage unit is, for example, attached to the inner wall of the main shaft by means of at least one support bracket. The at least one energy storage unit and/or the housing of the at least one energy storage unit is, for example, screwed to the at least one support bracket.

According to a further embodiment, the at least one energy storage unit includes multiple energy storage units, and the multiple energy storage units are arranged rotationally symmetric with respect to a rotational axis of the main shaft.

Thus, the multiple energy storage units are arranged in the cavity of the main shaft such that an imbalance with respect to a rotation of the combined arrangement of the main shaft and the multiple energy storage units is reduced and/or avoided. For example, by having the symmetric arrangement of the multiple energy storage units, an imbalance of the main shaft with the multiple energy storage units is smaller than a predetermined permissible maximum out-of-balance.

The multiple energy storage units are, in particular, all arranged in the cavity of the main shaft.

The multiple energy storage units being arranged rotationally symmetric with respect to the rotational axis of the main shaft means, for example, that the multiple energy storage units are arranged partially rotationally symmetric with respect to the rotational axis of the main shaft. In other words, the arrangement of the multiple energy storage units appears unchanged (i.e., is mapped onto itself) when rotated at certain angles smaller than 360 degrees around the rotational axis of the main shaft.

Merely as an example, the at least one energy storage unit includes six energy storage units arranged rotationally symmetric with respect to the rotational axis of the main shaft. Hence, the arrangement of the six energy storage units appears unchanged when it is rotated by an angle of 60 degrees (360 degrees divided by six) or by an angle of a multiple of 60 degrees.

According to a further embodiment,
the at least one energy storage unit has a rod-like shape,
a length of the at least one energy storage unit is multiple times larger than a diameter and/or than a height and a width of the at least one energy storage unit, and/or
the at least one energy storage unit has a length of 1 meter or more, 1.5 meters or more, 1.75 meters or more and/or 2 meters or more.

Thus, the at least one energy storage unit has an elongated shape fitting well into the elongated shape of the inner cavity of the main shaft.

The length of the main shaft and, thus, of the inner cavity of the main shaft is, for example, 2 meters or more, 2.5 meters or more and/or 3 meters or more.

Further, the length of the at least one energy storage unit is, for example, more than three times larger, more than five times larger, more than seven times larger and/or more than ten times larger than the diameter and/or than the height and the width of the of the at least one energy storage unit.

The diameter of the at least one energy storage unit is, for example, 0.1 meters (100 mm) or less, 0.15 meters (150 mm) or less, 0.18 meters (180 mm) or less, 0.2 meters (200 mm) or less, 0.25 meters (250 mm) or less and/or 0.3 meters (300 mm) or less.

According to a further embodiment, a length of the at least one energy storage unit is at least half of a length of the main shaft.

According to a further embodiment,
a longitudinal axis of the at least one energy storage unit is arranged parallel to a rotational axis of the main shaft, and/or
an angle between the longitudinal axis of the at least one energy storage unit and the rotational axis of the main shaft is 30 degrees or smaller, 20 degrees or smaller, 10 degrees or smaller and/or 5 degrees or smaller.

According to a further embodiment, a diameter of the cavity of the main shaft is at least 0.4 meters, at least 0.5 meters, and/or at least 0.6 meters.

The inner cavity of the main shaft has, for example, a tapered shape being tapered from a maximum diameter to a minimum diameter. Further, the minimum diameter of the cavity is, for example, at least 0.4 meters, at least 0.5 meters, and/or at least 0.6 meters.

According to a further embodiment,
the main shaft has, with respect to a longitudinal direction of the main shaft, a first end configured for coupling with a hub of the rotor and a second end configured for coupling with a gear box of the wind turbine and/or the generator,
the cavity of the main shaft has a tapered shape being tapered from the first end to the second end, and
the at least one energy storage unit is arranged adjacent the first end.

In particular, the cavity of the main shaft extends from the first end to the second end.

Arranging the at least one energy storage unit adjacent the first end of the main shaft (i.e., adjacent the first end of the inner cavity) allows easier arrangement and installation the at least one energy storage unit because a diameter of the cavity is largest at the first end. Furthermore, during installation, the at least one energy storage unit may, for example, be inserted into the cavity of the main shaft through an opening of the main shaft at the first end.

The tapered shape includes, for example, a trumpet shape.

According to a further embodiment,
the rotor comprises a hub,
the at least one pitch drive is arranged at the hub,
the wind turbine comprises at least one distribution unit arranged at the hub, and
the at least one distribution unit is connected to the at least one pitch drive and to the at least one energy storage unit by means of a respective energy line.

That means that the at least one pitch drive, the at least one energy storage unit, the at least one distribution unit and the energy lines connecting the at least one distribution unit with the at least one energy storage unit and the at least one pitch drive are all arranged in the "rotating world" of the rotor including its hub and the main shaft of the wind turbine. Therefore, in case of a failure of the connection with the stationary part of the nacelle, the at least one pitch drive can still be supplied with energy from the at least one energy storage unit via the at least one distribution unit.

The at least one pitch drive may be arranged in an interior space of the hub and/or at an external surface of the hub.

The at least one distribution unit may, for example, be arranged in the interior space of the hub.

The wind turbine may, for example, comprise a single distribution unit connected to each of the at least one pitch drive. However, the wind turbine may also comprise, for example, multiple distribution units connected to the at least one pitch drive.

The wind turbine comprises, for example, multiple rotor blades and a pitch drive for each rotor blade. In this case, the wind turbine may comprise a single distribution unit connected to each of the multiple pitch drives. Alternatively, the wind turbine may comprise multiple distribution units, each distribution unit connected to one of the multiple pitch drives.

In case of multiple distribution units and multiple energy storage units, each of the multiple distribution units is, for example, connected to one, some or all of the multiple energy storage units by means of a respective energy line.

In the case of a hydraulic pitch drive, the at least one distribution unit is, for example, a manifold for distributing a hydraulic fluid. Further, in this case the respective energy line is a hydraulic line for transporting hydraulic energy (e.g., a hose for transporting a hydraulic fluid). In particular, in the case of a hydraulic pitch drive, the respective energy line may include a hydraulic supply line for supplying a hydraulic fluid and a hydraulic discharge line for discharging a hydraulic fluid. Alternatively, also a single energy line (e.g., single hydraulic hose and/or pipe) can be used for each of the at least one energy storage units, the single energy line being configured for charging and discharging the energy storage unit.

In the case of an electric pitch drive, the at least one distribution unit is, for example, a junction box. Further, the respective energy line is an electric line for transporting electric energy (e.g., an electric cable).

According to a further embodiment, the wind turbine comprises:
a nacelle,
an energy source arranged in the nacelle for charging the at least one energy storage unit, wherein the distribution unit is connected by a connecting energy line with the energy source in the nacelle, and
one or more sensors arranged at the distribution unit for monitoring a status of the connecting energy line and/or of the energy source.

By monitoring the status of the connecting energy line and/or of the energy source in the nacelle by means of the one or more sensors arranged at the distribution unit, a failure of the connecting energy line, a failure of the transport of energy via the connecting energy line, and/or a failure of the energy source in the nacelle can be detected. In case that such a failure is detected, the at least one pitch drive can be supplied with energy solely from the at least one energy storage unit arranged in the cavity of the main shaft and/or from at least one further energy storage unit arranged in the rotor hub.

The connecting energy line includes, for example, a hydraulic line or an electric line. The connecting energy line is, for example, guided through the inner cavity of the main shaft.

According to a further embodiment, the wind turbine comprises at least one further energy storage unit for supplying energy to the at least one pitch drive, the at least one further energy storage unit being arranged in a hub of the rotor of the wind turbine.

The at least one further energy storage unit is, for example, also used for aerodynamic braking of the blades in case of an emergency.

Further, the distribution unit in the hub is, for example, connected to each of the at least one further energy storage unit by means of a respective energy line. Moreover, the energy source arranged in the nacelle is, for example, used for charging the at least one further energy storage unit.

According to a further embodiment, the wind turbine is an onshore wind turbine.

Regulations for transporting hubs of onshore wind turbines are particularly strict with respect to the size of hubs during transportation. Hence, saving space inside the hub by arranging the at least one energy storage unit inside the inner cavity of the main shaft is of particular advantage in case of onshore wind turbines. This is specially the case when longer and heavier blades causing larger pitch loads require a larger amount of energy for emergency pitch control.

The onshore wind turbine includes, for example, a concrete foundation.

In other embodiments, the wind turbine may also be an offshore wind turbine. Offshore includes marine environments as well as lakes and other open waters. A foundation of the offshore wind turbine includes, for example, a monopile, a tripod and/or a floating foundation.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a perspective view of a wind turbine according to an embodiment;
Fig. 2 shows a cross-section view of a main shaft of the wind turbine of Fig. 1, the main shaft comprising an inner cavity and at least one energy storage unit arranged in the inner cavity according to an embodiment;
Fig. 3 shows a front view of the main shaft of Fig. 2 according to an embodiment;
Fig. 4 shows a view similar as Fig. 3 but with six energy storage units arranged in the inner cavity of the main shaft according to an embodiment;
Fig. 5 shows a partial view of Fig. 2;
Fig. 6 shows a view similar as Fig. 5 but with a longitudinal axis of the at least one energy storage unit being inclined with respect to a rotational axis of the main shaft according to an embodiment; and
Fig. 7 illustrates functional components of a pitch system of the wind turbine of Fig. 1.

In the Figures, like reference numerals designate like or functionally equivalent elements, unless otherwise indicated.

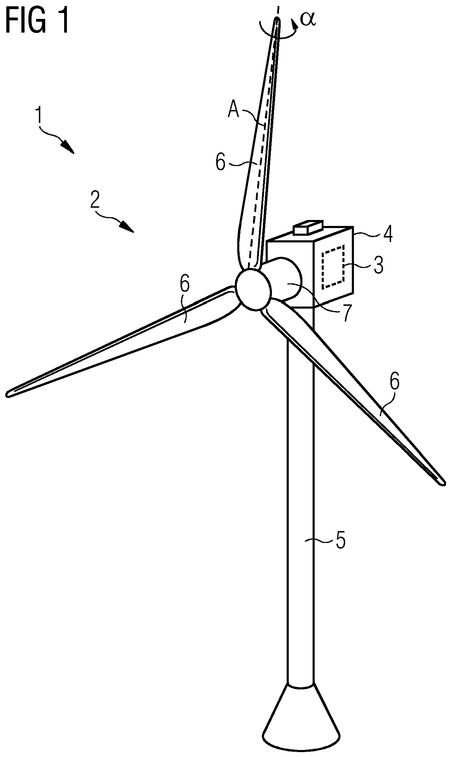

Fig. 1 shows a wind turbine 1 according to an embodiment.

The wind turbine 1 comprises a rotor 2 connected to a generator 3 arranged inside a nacelle 4. The nacelle 4 is arranged at the upper end of a tower 5 of the wind turbine 1.

The rotor 2 comprises, for example, three rotor blades 6. The rotor blades 6 are each connected rotatably to a hub 7 of the rotor 2. In particular, each of the blades 6 can be rotated relative to the hub 7 around a longitudinal axis A of the respective blade 6 to adjust a pitch angle α of the blade 6.

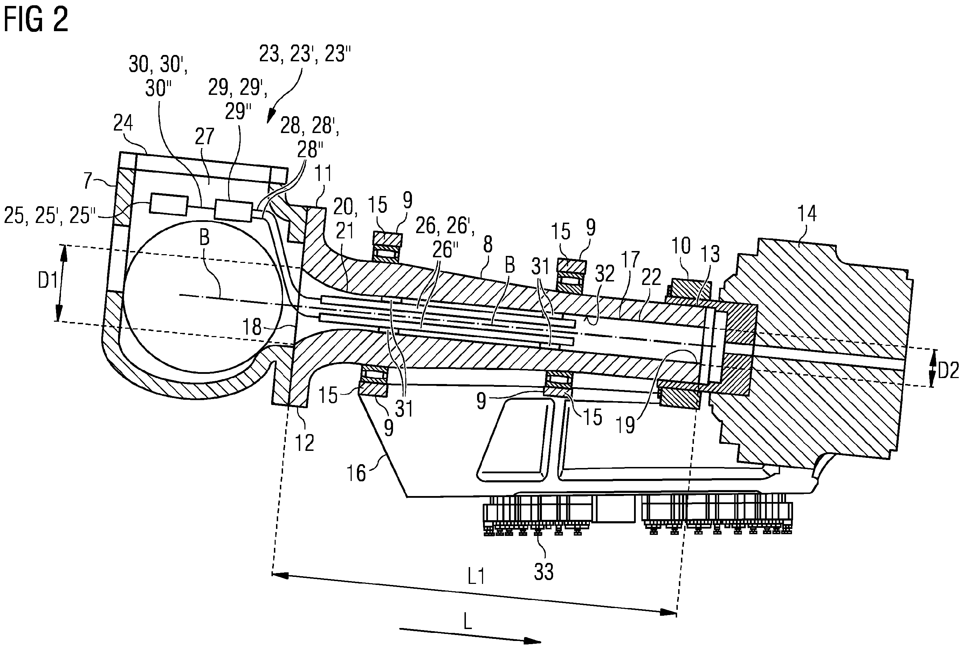

Fig. 2 shows a cross-section view of a main shaft 8 of the wind turbine 1 of Fig. 1. The main shaft 8 is supported rotatably by bearings 9.

The main shaft 8 connects the hub 7 to a coupling 10. The main shaft 8 comprises, with respect to a longitudinal direction L of the main shaft 8, a first and a second end 11, 13. The main shaft 8 comprises, for example, at its first end 11 a flange 12 which is fixed to the hub 7. The main shaft 8 is fixed, for example, at its second end 13 to the coupling 10.

The main shaft 8 is, in particular, a low-speed rotating shaft which rotates with the same rotational speed as the rotor 2.

The coupling 10 may be a shrink disc coupling. In the example of Fig. 2, the coupling 10 connects the main shaft 8 to a gear box 14 of the wind turbine 1. The gear box 14 is connected to a further shaft (high-speed shaft, not shown) which in turn is connected to the generator 3 (Fig. 1). A shaft axis, i.e., rotational axis, of the main shaft 8 is denoted by reference numeral B.

Although not shown in the figures, the wind turbine 1 may also be a direct driven (i.e., gearless) wind turbine without a gear box 14. In such a direct driven wind turbine, the main shaft 8 is directly coupled to the generator 3.

The wind turbine 1 comprises the bearings 9 supporting the main shaft 8 rotatably around the shaft axis B. The bearings 9 each comprises a bearing housing 15. The bearing housing 15 is bolted to a bed frame 16 to transmit loads from the shaft 8 to the bed frame 16. In addition to the shown bearings 9 or instead of one of the shown bearings 9, the wind turbine 1 may comprise one or more further bearings integrated into the gear box 14. Further, the gear box 14 may be supported by two torque arms (not shown) connected to the bed frame 16.

The bed frame 16 is connected at a lower part 33 thereof to a yaw bearing (not shown) which in turn is connected to the tower 5 (Fig. 1). By means of the yaw bearing, the bed frame 16 and the entire nacelle 4 is able to yaw around a yaw axis which substantially corresponds to the vertical axis of the tower 5 (Fig. 1).

The main shaft 8 is arranged at least partially inside the nacelle 4.

The main shaft 8 is configured as a hollow shaft having an inner cavity 17. The inner cavity 17 is, in particular extending from the first end 11 of the main shaft 8 to the second end 13 of the main shaft 8. The inner cavity 17 comprises, for example, an opening 18 at the first end 11 providing access to the inner cavity 17 of the main shaft 8. The inner cavity 17 may further comprise, for example, an opening 19 at the second end 13.

The main shaft 8 is, in particular, a rotationally symmetric body with respect to its rotational axis B. Therefore, also the inner cavity 17 of the main shaft 8 has a rotationally symmetric shape with respect to the rotational axis B of the main shaft 8. The inner cavity 17 of the main shaft 8 includes, in particular, the rotational axis B of the main shaft 8.

The inner cavity 17 has, for example, a tapered shape 20 being tapered from a first diameter D1 (maximum diameter D1) at the first end 11 to a second diameter D2 (minimum diameter D2) at the second end 13. In the example of Fig. 2, the tapered shape 20 of the inner cavity 17 is a trumpet shape 21. In other examples, the tapered shape 20 of the inner cavity 17 can also have another shape, e.g., an evenly tapered shaped.

Merely as an example, the first diameter D1 (maximum diameter D1) is 1.2 meters and the second diameter D2 (minimum diameter D2) is 0.5 meters. However, the first and second diameters D1, D2 may also have other values. For example, the first diameter D1 (maximum diameter D1) may have a value in the range of 1 to 2 meters. Further, the second diameter D2 (minimum diameter D2) may have a value in the range of 300 mm to 500 mm.

Furthermore, the inner cavity 17 has an elongated shape 22. That means that a length L1 of the inner cavity 17 is many times longer than the diameter D1, D2 (e.g., the minimum diameter D2) of the inner cavity 17. For example, the length L1 of the inner cavity 17 is more than three times and/or more than five times longer than the diameter D1, D2 (e.g., the minimum diameter D2) of the inner cavity 17.

The wind turbine 1 further comprises a pitch system 23 for adjusting the pitch angle α (Fig. 1) of the blades 6. The pitch system 23 includes a pitch bearing 24 fixed at the hub 7 for each of the blades 6. A respective pitch bearing 24 is supporting a respective blade 6 rotatably around the longitudinal axis A (Fig. 1) of the respective blade 6. In Fig. 2, the pitch bearing 24 attached to the hub 7 for one of the three blades 6 is visible.

The pitch system 23 further includes at least one pitch drive 25 for driving a rotation of the blades 6. The pitch system 23 includes, for example, a pitch drive 25 for each of the blades 6 of the wind turbine 1. The at least one pitch drive 25 is, for example, arranged at the hub 7. As shown in the figures, the at least one pitch drive 25 is, for example, arranged inside the hub 7, e.g., in an interior space 27 of the hub 7. However, in other examples, the at least one pitch drive 25 may, for example, also be arranged at an external surface of the hub.

The pitch system 23 further includes at least one energy storage unit 26 for supplying energy to the at least one pitch drive 25. The least one energy storage unit 26 is arranged in the inner cavity 17 of the main shaft 8 to save space in the hub 7. In Fig. 2, exemplarily two energy storage units 26 arranged in the inner cavity 17 of the main shaft 8 are shown. However, in other examples, there may be provided more or less than two energy storage units 26 in the inner cavity 17 of the main shaft 8.

The energy storage units 26 are connected to the at least one pitch drive 25 for supplying energy to the least one pitch drive 25. Each of the energy storage units 26 is, for example, connected by means of an energy line 28 to the at least one pitch drive 25. Moreover, a distribution unit 29 may be provided (e.g., arranged inside the hub 7), wherein the distribution unit 29 is connected by means of said energy lines 28 to each of the energy storage units 26. Further, the distribution unit 29 is connected by means of a further energy line 30 to the at least one pitch drive 25.

The pitch system 23 is, for example, a hydraulic pitch system 23'. In this case, the at least one pitch drive 25 includes a hydraulic pitch drive 25' and the at least one energy storage unit 26 is a storage unit 26' for storing hydraulic energy. Furthermore, the energy lines 28, 30 are hydraulic lines 28', 30' and the distribution unit 29 is, for example, a manifold 29'. Although not shown in the figures, each energy line 28, 30 for transporting a hydraulic fluid described herein may include a hydraulic supply line for supplying the hydraulic fluid and a hydraulic discharge line for discharging the hydraulic fluid. Alternatively, also a single energy line 28, 30 (e.g., single hydraulic hose and/or pipe) can be used for each of the at least one energy storage unit 26, the single energy line being configured for charging and discharging the energy storage unit 26.

The pitch system 23 may, for example, also be an electric pitch system 23" having an electric pitch drive 25" and at least one electric energy storage unit 26". In this case, the energy lines 28, 30 are electric lines 28", 30" and the distribution unit 29 is, for example, a junction box 29".

The at least one energy storage unit 26 is attached to the main shaft 8 such that the at least one energy unit 26 rotates together with the main shaft 8. As shown in Fig. 2, the at least one energy storage unit 26 is, for example, fixed by means of one or more brackets 31 to the main shaft 8, e.g., to an inner wall 32 of the main shaft 8.

In embodiments in which the pitch system 23 includes multiple energy storage units 26, these multiple energy storage units 26 may be arranged rotationally symmetric with respect to the rotational axis B of the main shaft 8. This is of advantage since the energy storage units 26 are fixed to the main shaft 8 and rotate together with the main shaft 8. With the rotationally symmetric arrangement of the energy storage units 26, an imbalance of the rotation of the main shaft 8 is reduced and/or avoided.

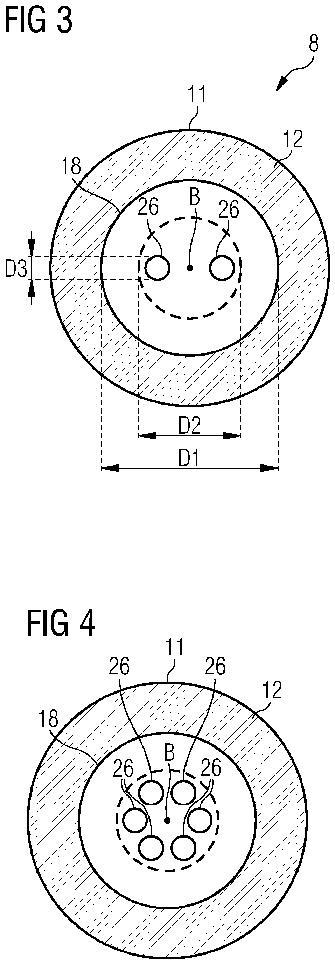

Fig. 3 shows a front view of the main shaft 8 of Fig. 2 seen from the first end 11 of the main shaft 8. Visible in Fig. 3 is the flange 12 of the main shaft 8 at the first end 11. As can be seen from Fig. 3, the two energy storage units 26 are arranged rotationally symmetric with respect to the rotational axis B of the main shaft 8.

Fig. 4 shows another example with six energy storage units 26 arranged rotationally symmetric with respect to the rotational axis B of the main shaft.

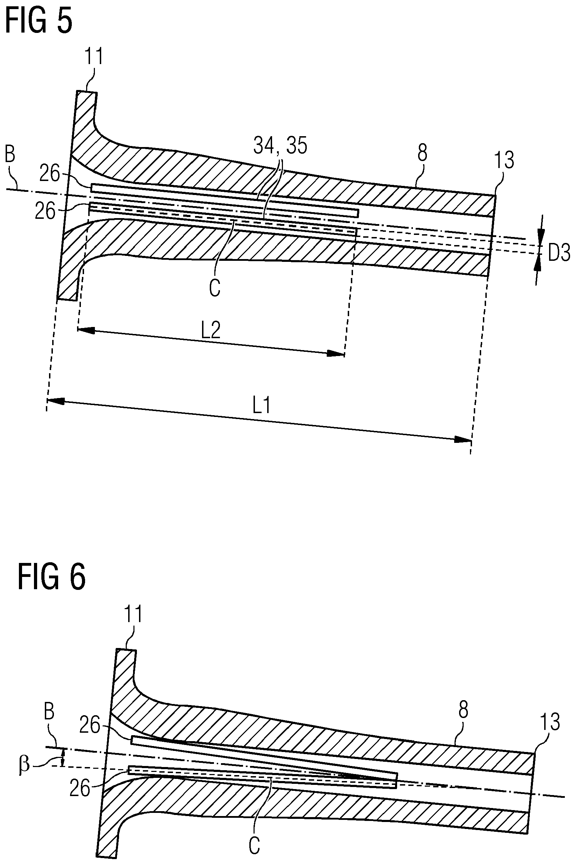

The at least one energy storage unit 26 has, for example, an elongated, rod-like shape 34, as shown in Fig. 5. In addition, the at least one energy storage unit 26 has, for example, a cylindrical shape 35, e.g., with a circular cross-section and a diameter D3 (Fig. 3, 5).

Fig. 5 illustrates the elongated shape 34 of the at least one energy storage unit 26. In particular, a length L2 of the at least one energy storage unit 26 is multiple times (e.g., more than five times and/or more than ten times) larger than the diameter D3 of the at least one energy storage unit 26. In case of a non-circular cross-section of the at least one energy storage unit 26, the length L2 of the at least one energy storage unit 26 is multiple times (e.g., more than five times and/or more than ten times) larger than a height and a width of the at least one energy storage unit 26.

The length L2 of the at least one energy storage unit 26 is, for example, 1 meter or more, 1.5 meters or more, 1.75 meters or more and/or 2 meters or more. Furthermore, the diameter D3 of the at least one energy storage unit 26 is, for example, 100 mm or less, 120 mm or less, 180 mm or less, 200 mm or less, 250 mm or less and/or 300 mm or less.

In addition or instead, the length L2 of the at least one energy storage unit 26 may, for example, be at least half of the length L1 of the main shaft 8 (Fig. 5).

In embodiments in which the inner cavity 17 of the main shaft 8 has a tapered shape 20 and/or a trumpet shape 21 (Fig. 2), the at least one energy storage unit 26 may advantageously be arranged adjacent the first end 11 of the main shaft 8. This allows easier arrangement and installation of the at least one energy storage unit 26 because the diameter D1 of the cavity 17 is largest at the first end 11. Furthermore, during installation, the at least one energy storage unit 26 may, for example, be inserted into the cavity 17 of the main shaft 8 through the opening 18 at the first end 11 having the maximum diameter D1.

Furthermore, a longitudinal axis C of the at least one energy storage unit 26 may, for example, be arranged parallel to the rotational axis B of the main shaft 8, as shown in Fig. 5.

In other examples, the longitudinal axis C of the at least one energy storage unit 26 may, for example, be arranged inclined to the rotational axis B of the main shaft 8, as shown in Fig. 6. In particular, an angle β between the longitudinal axis C of the at least one energy storage unit 26 and the rotational axis B of the main shaft 8 is, for example, 30 degrees or smaller, 20 degrees or smaller, 10 degrees or smaller and/or 5 degrees or smaller.

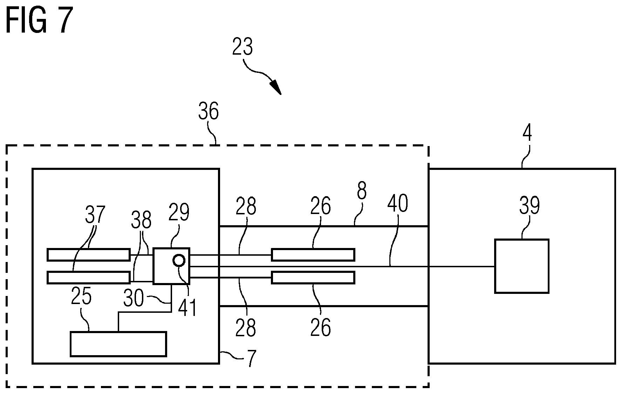

Fig. 7 illustrates functional components of the pitch system 23. In Fig. 7, the hub 7 and the main shaft 8 as rotating part 36 of the wind turbine 1 are shown. Further, the nacelle 4 as stationary part of the wind turbine 1 is shown (stationary with respect to a rotation of the rotor 2 and the main shaft 8).

The pitch drive 25 of the pitch system 23 is, for example, arranged in the hub 7. Further, the distribution unit 29 (e.g., the manifold 29' in case of a hydraulic pitch drive 25') is shown in the hub 7. Furthermore, the at least one energy storage unit 26 is arranged in the cavity 17 (Fig. 2) of the main shaft 8. Each of the at least one energy storage units 26 is connected by the energy line 28 to the distribution unit 29. Further, the pitch drive 25 is connected by the energy line 30 to the distribution unit 29.

As shown in Fig. 7, in addition to the at least one energy storage unit 26 arranged in the cavity 17 of the main shaft 8, optionally also at least one further energy storage unit 37 may be arranged inside the hub 7. In this case, each of the at least one further energy storage unit 37 is connected by an energy line 38 to the distribution unit 29.

The pitch system 23 may, for example, further include an energy source 39 arranged in the nacelle 4 for charging the at least one energy storage unit 26 in the cavity 17 of the main shaft 8. The energy source 39 in the nacelle 4 may in addition be configured for charging the at least one further energy storage unit 37 in the hub 7. The distribution unit 29 may be connected by a connecting energy line 40 with the energy source 39 in the nacelle 4.

Optionally, the pitch system 23 comprises one or more sensors 41 arranged at the distribution unit 29 for monitoring a status of the connecting energy line 40 and/or of the energy source 39 in the nacelle 4. Using the one or more sensors 41, a failure of the connecting energy line 40 and/or of the energy source 39 in the nacelle 4 can be detected. In case that such a failure is detected, the pitch drive 25 can be supplied with energy solely from the at least one energy storage unit 26 arranged in the cavity 17 of the main shaft 8 and/or from at the least one further energy storage unit 37 arranged in the rotor hub 7.

Hence, the pitch system 23 can be used for aerodynamically braking the rotor blades 6 in case of an emergency, even when a supply of energy from the energy source 39 in the nacelle 4 is not possible.

Although the present invention has been described in accordance with preferred embodiments, it is obvious for the person skilled in the art that modifications are possible in all embodiments.

## Claims

1. A wind turbine (1), comprising:
a rotor (2) with at least one blade (6),
a main shaft (8) configured for transmitting a rotation of the rotor (2) to a generator (3) of the wind turbine, the main shaft (8) comprising an inner cavity (17),
at least one pitch drive (25) for adjusting a pitch angle (α) of the at least one blade (6), and
at least one energy storage unit (26) for supplying energy to the at least one pitch drive (25), the at least one energy storage unit (26) being arranged in the cavity (17) of the main shaft (8).

2. The wind turbine according to claim 1, wherein the pitch drive (25) includes a hydraulic pitch drive (25'), and the at least one energy storage unit (26) includes at least one storage unit (26') for storing hydraulic energy.

3. The wind turbine according to claim 1, wherein the pitch drive (25) includes an electric pitch drive (25"), and the at least one energy storage unit (26) includes at least one storage unit (26") for storing electric energy.

4. The wind turbine according to one of claims 1 to 3, wherein the at least one energy storage unit (26) is attached to the main shaft (8) such that it rotates together with the main shaft (8).

5. The wind turbine according to one of claims 1 to 4, wherein the main shaft (8) comprises an inner wall (32) defining the inner cavity (17), and the at least one energy storage unit (26) is attached to the inner wall (32) of the main shaft (8).

6. The wind turbine according to one of claims 1 to 5, wherein the at least one energy storage unit (26) includes multiple energy storage units (26), and the multiple energy storage units (26) are arranged rotationally symmetric with respect to a rotational axis (B) of the main shaft (8).

7. The wind turbine according to one of claims 1 to 6, wherein
the at least one energy storage unit (26) has a rod-like shape (34),
a length (L2) of the at least one energy storage unit (26) is multiple times larger than a diameter (D3) and/or than a height and a width of the at least one energy storage unit (26), and/or
the at least one energy storage unit (26) has a length (L2) of 1 meter or more, 1.5 meters or more, 1.75 meters or more and/or 2 meters or more.

8. The wind turbine according to one of claims 1 to 7, wherein a length (L2) of the at least one energy storage unit (26) is at least half of a length (L1) of the main shaft (8).

9. The wind turbine according to one of claims 1 to 8, wherein
a longitudinal axis (C) of the at least one energy storage unit (26) is arranged parallel to a rotational axis (B) of the main shaft (8), and/or
an angle (β) between the longitudinal axis (C) of the at least one energy storage unit (26) and the rotational axis (B) of the main shaft (8) is 30 degrees or smaller, 20 degrees or smaller, 10 degrees or smaller and/or 5 degrees or smaller.

10. The wind turbine according to one of claims 1 to 9, wherein a diameter (D2) of the cavity (17) of the main shaft (8) is at least 0.4 meters, at least 0.5 meters, and/or at least 0.6 meters.

11. The wind turbine according to one of claims 1 to 10, wherein
the main shaft (8) has, with respect to a longitudinal direction (L) of the main shaft (8), a first end (11) configured for coupling with a hub (7) of the rotor (2) and a second end (13) configured for coupling with a gear box (14) of the wind turbine and/or the generator (3),
the cavity (17) of the main shaft (8) has a tapered shape (20) being tapered from the first end (11) to the second end (13), and
the at least one energy storage unit (26) is arranged adjacent the first end (11).

12. The wind turbine according to one of claims 1 to 11, wherein
the rotor (2) comprises a hub (7),
the at least one pitch drive (25) is arranged at the hub (7),
the wind turbine comprises at least one distribution unit (29) arranged at the hub (7), and
the at least one distribution unit (29) is connected to the at least one pitch drive (25) and to the at least one energy storage unit (26) by means of a respective energy line (28, 30) .

13. The wind turbine according to claim 12, comprising:
a nacelle (4),
an energy source (39) arranged in the nacelle (4) for charging the at least one energy storage unit (26), wherein the distribution unit (29) is connected by a connecting energy line (40) with the energy source (39) in the nacelle (4), and
one or more sensors (41) arranged at the distribution unit (29) for monitoring a status of the connecting energy line (40) and/or of the energy source (39).

14. The wind turbine according to one of claims 1 to 13, comprising at least one further energy storage unit (37) for supplying energy to the at least one pitch drive (25), the at least one further energy storage unit (37) being arranged in a hub (7) of the rotor (2) of the wind turbine.

15. The wind turbine according to one of claims 1 to 14, wherein the wind turbine is an onshore wind turbine.
